# EUROPÄISCHE PATENTANMELDUNG

(11) **EP 1 103 389 A2**
(43) Veröffentlichungstag der Anmeldung: **30.05.2001**
(21) Anmeldenummer: 00122405.4
(22) Anmeldetag: 13.10.2000
(51) Int. Cl.: B60B 27/00

(54) **Radlagerung**

(30) Priorität: 26.11.1999 DE 19956838
(71) Anmelder: BPW Bergische Achsen Kommanditgesellschaft, 51674 Wiehl (DE)
(72) Erfinder: Lang, Karl Reiner, 51588 Nümbrecht (DE); Leidig, Hans-Josef, 51580 Reichshof (DE)
(74) Vertreter: Stenger, Watzke & Ring Patentanwälte

(57) **Zusammenfassung**

Die Erfindung betrifft eine Radlagerung, insbesondere für Anhängerachsen, mit einer mittels eines vorderen und eines hinteren Wälzlagers (2, 3) drehbar auf einem Achsschenkel (4) gelagerten Nabe (1), an der ein Rad befestigbar ist, wobei zwischen dem vorderen und dem hinteren Wälzlager (2, 3) eine den Achsschenkel (4) umgebende Hülse (5) angeordnet ist. Um eine vollständige Kapselung der Schmierstoffräume (14, 15) gegenüber dem Achsschenkel (4) bei gleichzeitigem Ausgleich auftretender Axialbewegungen zwischen den Wälzlagern (2 und 3) gewährleisten zu können, wird erfindungsgemäß vorgeschlagen, daß die Hülse (5) als in axialer Richtung des Achsschenkels (4) biegeelastische Hülse (5) ausgebildet ist.

## Beschreibung

Die Erfindung betrifft eine insbesondere für Anhängerachsen bestimmte Radlagerung mit einer mittels eines vorderen und eines hinteren Wälzlagers drehbar auf einem Achsschenkel gelagerten Nabe, an der ein Rad befestigbar ist, wobei zwischen den Innenringen des vorderen und des hinteren Wälzlagers eine den Achsschenkel umgebende Hülse angeordnet ist.

Eine solche Radlagerung mit innerem und äußerem Wälzlager, die sich jeweils aus einem Innenring, einem Außenring und den Wälzkörpern zusammensetzen, ist aus der US 5,386,630 bekannt. Zwischen den Innenringen der Wälzlager befinden sich zwei den Achsschenkel umgebende Hülsen. Die eine Hülse ist vollkommen starr, wohingegen die andere, im Vergleich kürzer ausgebildete Hülse aus einem plastisch dauerhaft verformbaren Material besteht. Zur Lagervoreinstellung wird die Nabe mit den Wälzlagern in ein Spezialwerkzeug eingesetzt, welches einen aufeinander zugerichteten axialen Druck auf die Wälzlager ausübt. Dieser Druck führt zu einer bleibenden plastischen Verformung der kurzen Hülse, wodurch der Lagerabstand voreingestellt ist. Sodann werden die Einzelteile der Radlagerung auf den Achsschenkel aufgesetzt, wobei die mittels der plastisch verformten Hülse bewirkte Axialeinstellung beibehalten wird. Da die zur plastischen Verformung der kurzen Hülse aufgebrachte Axialkraft größer ist, als das Anzugsmoment der zentralen Achsmutter, kann es im Betrieb zu keiner weiteren Stauchung der Hülse mehr kommen.

Aus der US 5,757,084 ist ebenfalls eine Radlagerung mit einer den Achsschenkel umgebenden und zwischen dem vorderen und hinteren Wälzlager angeordneten Hülse bekannt. Die Hülse dient hier in erster Linie dazu, den zur Schmierung der Wälzlager dienenden und im Bereich zwischen dem vorderen und dem hinteren Wälzlager befindlichen Schmierstoff daran zu hindern, über den Achsschenkel aus der Radlagerung auszutreten. Da es während des Betriebs und insbesondere bei der Montage der Radlagerung auf dem Achsschenkel zu Axialverschiebungen zwischen den beiden Wälzlagern kommen kann, ist bei der aus dem US-Patent 5 757 084 bekannten Radlagerung ein Freiraum zwischen der Hülse und der hinteren Radlagerung ausgebildet, so daß sich die beiden Radlagerungen bei der Montage der Radlagerung auf dem Achsschenkel in Axialrichtung des Achsschenkels aufeinander zu bewegen können. Dieser Freiraum zwischen der Hülse und der hinteren Radlagerung ermöglicht somit zwar die bei der Montage oder im Betrieb auftretende Axialverschiebung der beiden Wälzlager aufeinander zu, jedoch besteht die Gefahr, daß über den Freiraum Schmiermittel aus dem Schmiermittelvorrat austritt und/oder Fremdstoffe und/oder Feuchtigkeit in den Schmierbereich der Radlagerung eintreten.

Der Erfindung liegt die **Aufgabe** zugrunde, eine Radlagerung der eingangs genannten Art derart weiterzubilden, daß trotz einer möglichen axialen Veränderung des Abstandes der Wälzlager zueinander einerseits das Austreten von Schmierstoff aus einem Schmierstoffvorrat und andererseits das Eindringen von Fremdstoffen in den Schmierbereich verhindert wird.

Zur **Lösung** dieser Aufgabenstellung ist erfindungsgemäß die Hülse als in axialer Richtung des Achsschenkels biegeelastische Hülse ausgebildet.

Durch diese vollständige Rückverformbarkeit der Hülse in axialer Richtung ist es bei der erfindungsgemäßen Radlagerung möglich, daß die Hülse nicht nur den gesamten axialen Abstand zwischen dem vorderen und dem hinteren Wälzlager abdeckt, sondern sich die Wälzlager im Betrieb oder bei der Montage der Radlagerung voneinander wegbewegen können, ohne daß dadurch ein Freiraum zwischen den Wälzlagern entsteht, in den Schmutzpartikel eintreten können.

Zur Erzielung einer Elastizität, bei der die Hülse auch bei vom Achsschenkel abgezogener Radlagerung an beiden Wälzlagern zugleich anliegt, können in bevorzugter Weise an der Hülse einzelne vorgegebene Biegebereiche ausgebildet sein. Durch die Vorgabe bestimmter Biegebereiche ist es durch geeignete Materialauswahl und/oder geometrische Ausgestaltung der Hülse möglich, das Maß der Biegeelastizität der Hülse genau vorherzubestimmen.

Gemäß einer praktischen Ausführungsform der Erfindung weist die Hülse wenigstens zwei Teilbereiche mit jeweils unterschiedlichen Durchmessern auf, wobei diese Teilbereiche über einen Übergangsbereich miteinander verbunden sind, der im Längsschnitt S-förmig ausgebildet ist. Dieser S-förmige Übergangsbereich bildet den definierten Biegebereich der Hülse, da sich im Bereich dieser S-förmigen Wellenstruktur die einzelnen Teilbereiche der Hülse in Axialrichtung des Achsschenkels gegeneinander verschieben können.

Die Biegeelastizität der Hülse kann bei dieser Ausgestaltung dadurch verstärkt werden, daß die Hülse zumindest im S-förmigen Übergangsbereich mindestens einen radial umlaufenden Bereich mit einer reduzierten Materialwandstärke aufweist. Durch diese Reduzierung der Materialwandstärke im Bereich des S-förmigen Übergangsbereichs wird die Biegeelastizität der Hülse bei einer auftretenden Axialbelastung deutlich erhöht, wodurch auch die Gefahr einer unerwünschten, bleibenden Verformung der Hülse bei einer Axialverschiebung der Wälzlager aufeinander zu minimiert wird.

Schließlich wird mit der Erfindung vorgeschlagen, daß auf der äußeren Mantelfläche der Hülse auf einer umlaufenden Kreisbahn radial nach außen vorstehende Nocken zur Anlage an einem mit dem Außenring des hinteren Wälzlagers verbundenen Fettfangblech ausgebildet sind.

Gemäß einer besonders vorteilhaften Ausgestaltung der Erfindung hält die Hülse in Zusammenspiel mit der Nabe oder Mitteln wie einem Fettfangblech, einer Ablaufsicherung, einer Dichtung oder dergleichen, Schmierfett im Bereich der Wälzlager. Dadurch läßt sich die zu befüllende Schmierfettmenge reduzieren und für eine längere Zeit im Bereich der Wälzlager halten.

Weitere Vorteile der Erfindung ergeben sich aus der nachfolgenden Beschreibung der zugehörigen Zeichnung, in der ein Ausführungsbeispiel einer erfindungsgemäßen Radlagerung dargestellt ist. In der Zeichnung zeigt:
- Fig. 1: einen Längsschnitt durch eine erfindungsgemäße Radlagerung mit einer auf einem Achsschenkel montierten Nabe;
- Fig. 2: eine perspektivische Ansicht einer biegeelastischen Hülse;
- Fig. 3: einen vergrößerten Längsschnitt durch die biegeelastische Hülse gemäß Fig. 2;
- Fig. 4: eine vergrößerte Darstellung der Detailansicht IV gemäß Fig. 3;
- Fig. 5: eine vergrößerte Darstellung der Detailansicht V gemäß Fig. 3 und
- Fig. 6: einen Längsschnitt durch die aus Nabe, zentraler Achsmutter und den Wälzlagern bestehende Einheit bei von dem Achsschenkel abgenommener Nabe.

Die anhand eines Ausführungsbeispiels dargestellte Radlagerung umfaßt eine Nabe 1, die mit einem Befestigungsflansch 1.1 für ein auf der Zeichnung nicht dargestelltes Bremselement sowie für ein Rad versehen ist. Bei dem Bremselement kann es sich um eine Bremstrommel oder eine Bremsscheibe handeln.

Im Inneren der Nabe 1 sind zwei Wälzlager 2 und 3 angeordnet, die beim Ausführungsbeispiel als Kegelrollenlager mit unterschiedlichen Durchmessern ausgebildet sind. Das vordere Wälzlager 2 hat einen kleineren Durchmesser als das hintere Wälzlager 3. Beide Wälzlager 2 und 3 bestehen jeweils aus einem Innenring 2.1 bzw. 3.1, einem Außenring 2.2 bzw. 3.2 und Kegelrollen 2.3 bzw. 3.3, die jeweils durch einen Käfig 2.4 bzw. 3.4 gehalten sind.

Die Innenringe 2.1 und 3.1 der beiden Wälzlager 2 und 3 sitzen jeweils auf einem zylindrischen Lagersitz 4.2 bzw. 4.3 eines Achsschenkels 4, der an seinem vorderen Ende mit einem Außengewindeabschnitt 4.1 versehen ist.

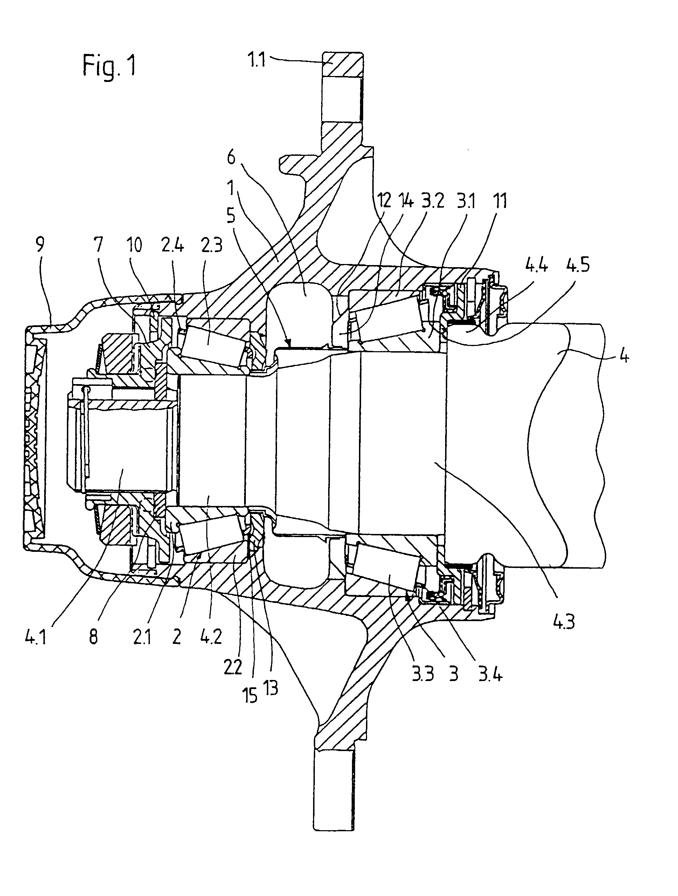

Wie weiterhin aus Fig. 1 ersichtlich, ist zwischen dem vorderen Wälzlager 2 und dem hinteren Wälzlager 3 auf dem Achsschenkel 4 eine Hülse 5 angeordnet, um die Ringkammer 6 und die in Betriebszustand mit Schmierstoff gefüllten Schmierstoffräume 14 und 15, welche durch die Ablaufsicherung 13 und das Fettfangblech 12 gebildet werden, gegenüber dem Achsschenkel 4 abzudichten. Die Hülse 5 und die darauf jeweils radial stehenden Bleche 12 und 13 des Fettfangs und der Ablaufsicherung halten dabei das Schmierfett weitestgehend in den Schmierstoffräumen 14 und 15 im Bereich der Wälzlager 2 und 3.

Um die mit den Wälzlagern 2 und 3 versehenen Nabe 1 in axialer Richtung definiert auf dem Achsschenkel 4 zu positionieren, ist an dem Achsschenkel 4 eine Ringschulter 4.4 angeformt, die, wie aus Fig. 1 ersichtlich, eine radial verlaufende, ringförmige Anschlagfläche 4.5 für den Innenring 3.1 des hinteren Wälzlagers 3 bildet.

Die Positionierung und Halterung der mit den beiden Wälzlagern 2 und 3 versehenen Nabe 1 auf dem Achsschenkel 4 geschieht bei dem dargestellten Ausführungsbeispiel einer Radlagerung mit Hilfe einer Achsmutter 7, die auf dem Außengewindeabschnitt 4.1 des Achsschenkels 4 aufgeschraubt wird. Beim Ausführungsbeispiel ist zwischen der Achsmutter 7 und dem Innenring 2.1 des vorderen Wälzlagers 2 eine Druckscheibe 8 angeordnet, die mit einer Nase in eine Nut im Außengewindeabschnitt 4.1 des Achsschenkels 4 hineinragt und auf diese Weise unverdrehbar und zugleich axial verschiebbar am Achsschenkel 4 gehalten wird. Das Innere der Nabe 1 wird durch eine Kappe 9 abgedeckt.

Bei dem dargestellten Ausführungsbeispiel einer Radnabe erfolgt das Aufschieben der Nabe 1 auf den Achsschenkel 4 sowie das Abziehen vom Achsschenkel allein mit Hilfe der Achsmutter 7. Hierzu ist es lediglich erforderlich, die Nabe 1 mit den vormontierten Wälzlagern 2 und 3, der zwischen den Wälzlagern 2 und 3 angeordneten Hülse 5 und der durch ein Verbindungselement 10 in der Nabe gehaltenen Achsmutter 7 soweit auf den Achsschenkel 4 aufzuschieben, bis die Achsmutter 7 in das Gewinde des Außengewindeabschnitts 4.1 eingreift. Ein anschließendes Drehen der Achsmutter 7 sorgt für ein zuverlässiges Aufschieben der Wälzlager 2 und 3 auf die Lagersitze 4.2 und 4.3 des Achsschenkels 4, bis die Nabe 1 ihre exakte Position auf dem Achsschenkel 4 erreicht hat, in der die hintere Stirnfläche des Innenringes 3.1 des hinteren Wälzlagers 3 an der Anschlagfläche 4.5 der Ringschulter 4.4 anliegt. Bei dem dargestellten Ausführungsbeispiel ist zwischen dem Innenring 3.1 des hinteren Wälzlagers 3 und der Anschlagfläche 4.5 noch ein Mitnahmering 11 angeordnet, der für das Abziehen der Nabe 1 einschließlich der Wälzlager vom Achsschenkel 4 als komplette Einheit erforderlich ist.

Für den ordnungsgemäßen Betrieb einer solchermaßen ausgestalteten Radlagerung ist es notwendig, daß sich die Wälzlager 2 und 3 im Betrieb sowie beim Aufschieben bzw. Abziehen der Nabe 1 auf bzw. von dem Achsschenkel 4 in Axialrichtung des Achsschenkels 4 aufeinander zu bewegen sowie vor allem axial voneinander entfernen zu können. Diese Axialbewegung der Wälzlager 2 und 3 relativ zueinander würde bei der Verwendung einer starren Hülse 5 die Kapselung der Ringkammer 6 und/oder der Schmierstoffräume 14 bzw. 15 verhindern. Es würde entweder zu einer irreversiblen Stauchung der Hülse 5 und somit einer anschließend nicht mehr vollständigen Kapselung kommen, oder aber zur Enstehung eines Ringspaltes an dem einen oder dem anderen Ende der Hülse 5, durch welchen Ringspalt Schmutzpartikel in die Schmierstoffräume 14 bzw. 15 und/oder die Ringkammer 6 eindringen könnten.

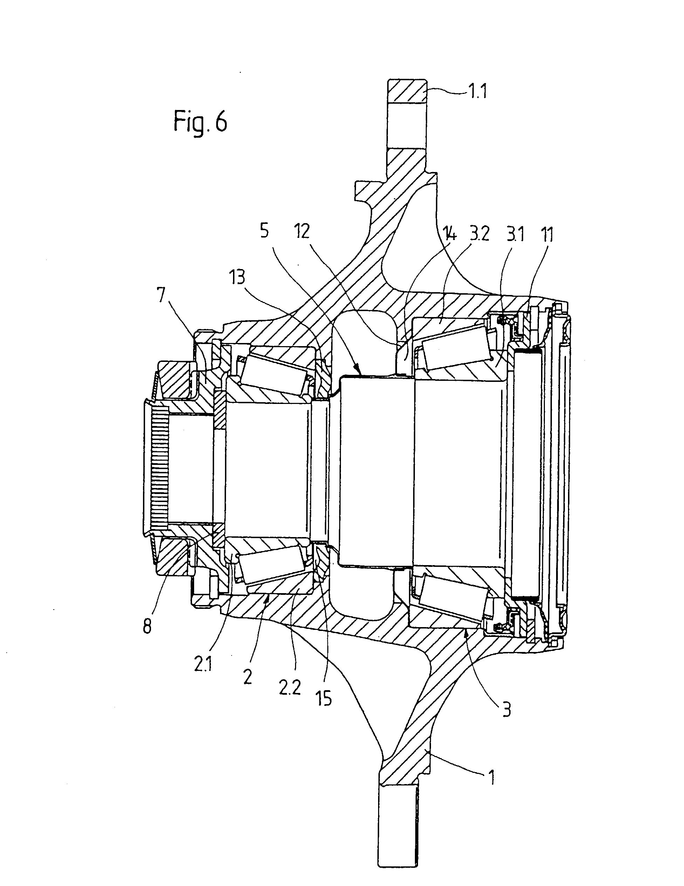

Aus diesem Grund ist die Hülse 5 zur Kapselung der Schmierstoffräume 14 und 15 als in axialer Richtung des Achsschenkels 4 biegeelastische und vorgespannte Hülse 5 ausgebildet. Die Hülse 5 kann einer relativen Axialbewegung der Innenringe 2,1 und 3,1 der Wälzlager 2 und 3 reversibel folgen. Entfernen sich diese Innenringe axial voneinander, wie dies etwa bei dem auf Figur 6 dargestellten Ausbau der aus Nabe, den Wälzlagern und der zentralen Achsmutter bestehenden Baueinheit der Fall ist, liegt die Hülse 5 infolge ihrer Vorspannung mit ihren beiden Stirnflächen an den Innenringen des 2.1 und 3.1 an. Auch in ausgebautem Zustand, wie er in Fig. 6 dargestellt ist, können daher keine Schmutzpartikel in die Ringkammer 6 und/oder die Schmierstoffräume 14 bzw. 15 eindringen. Gleichermaßen kann die Hülse 5 auch eine Stauchbewegung mitmachen, d.h. eine Bewegung, bei der sich die Innenringe 2.1 und 3.1 näherkommen als im normalen Betriebszustand der Radlagerung.

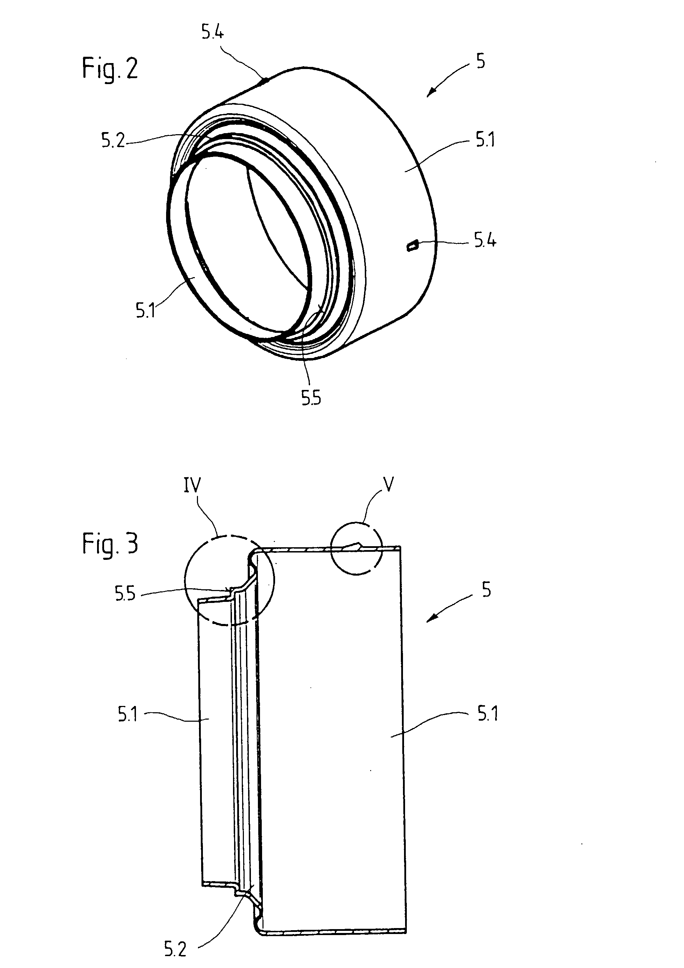

Wie aus den Fign. 2 und 3 ersichtlich, weist die Hülse 5 bei dem dargestellten Ausführungsbeispiel zwei Teilbereiche 5.1 mit jeweils unterschiedlichem Durchmesser auf, die über einen im Längsschnitt S-förmigen Übergangsbereich 5.2 und eine Auflagerfläche 5.5 miteinander verbunden sind. Der S-förmig gewellte Übergangsbereich 5.2 bildet einen radial umlaufenden, vorbestimmten Biegebereich, in dem sich die Hülse 5 elastisch, d.h. reversibel verformen kann. Hierzu liegt die Hülse 5 im Betriebszustand der Radlagerung, wie er in Fig. 1 dargestellt ist, unter einer gewissen Vorspannung an den beiden Innenringen 2.1 und 2.3 der Wälzlager 2 und 3 an. Aufgrund dieser elastischen Vorspannung kann die Hülse 5 einer Vergrößerung des Axialabstandes zwischen den Lagerinnenringen 2.1 und 3.1 folgen. In gleicher Weise läßt sich die Hülse 5 auch axial stauchen, wobei auch in diesem Fall die elastische Rückverformung sichergestellt ist.

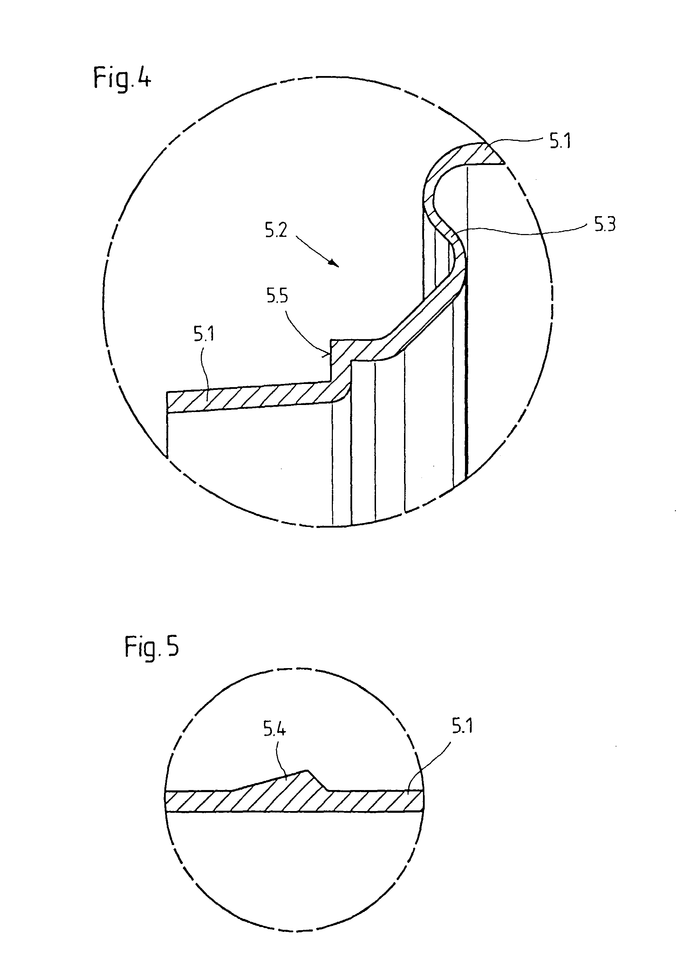

Wie weiterhin aus der vergrößerten Detailansicht gemäß Fig. 4 ersichtlich, wird bei dem dargestellten Ausführungsbeispiel die Biegeelastizität des S-förmig ausgestalteten Übergangsbereichs 5.2 weiter dadurch erhöht, daß der Übergangsbereich 5.2 einen radial umlaufenden Bereich 5.3 mit einer reduzierten Materialwandstärke aufweist. Durch diese Reduzierung der Materialwandstärke in einem Bereich 5.3 des Übergangsbereichs 5.2 wird die Kraft, die notwendig ist, um die elastisch vorgespannte Hülse 5 in Axialrichtung reversibel zu stauchen, deutlich herabgesetzt.

Andererseits bietet die Biegeelastizität der Hülse 5 in Axialrichtung die Möglichkeit, den gesamten Schmierstoffvorrat, vorliegend in den Schmierstoffräumen 14 und 15 - gemäß einer hier nicht dargestellten Ausführungsform auch die als Schmierstoffvorratsraum verwendbare Ringkammer 6 - vom vorderen Wälzlager 2 bis zum hinteren Wälzlager 3 gegenüber dem Achsschenkel 4 abzudichten. Die Biegeelastizität der Hülse 5 gewährleistet dabei, daß auch bei einer Axialbewegung der Wälzlager 2 und 3 voneinander weg oder aufeinander zu diese vollständige Kapselung des Schmierstoffraumes 6 erhalten bleibt, da die biegeelastische und axial vorgespannte Hülse 5 diese Axialbewegungen der Wälzlager 2 und 3 kompensiert.

Fig. 5 zeigt, daß auf der äußeren Mantelfläche der Hülse 5 auf einer umlaufenden Kreisbahn einzelne radial nach außen vorstehende Nocken 5.4 ausgebildet sind, welche während der Montage zur Anlage an einem mit dem Außenring 3.2 des hinteren Wälzlagers 3 verbundenen Fettfangblech 12 dienen.

Bei der Montage liegen die Auflagerflächen 5.5 der Hülse 5 an der Ablaufsicherung 13 und die Nocken 5.4 der Hülse 5 an dem Fettfangblech 12 an, wie in Fig. 6 dargestellt, und verhindern so, daß diese während der Montage ihre Position in der Nabe 1 beim Einsetzen der Wälzlager 2 und 3 verändert. Nach der Montage ist die Hülse 5, wie in Fig. 1 gezeigt, zusammengestaucht und zwischen der Auflagerfläche 5.5 der Hülse 5 und der Ablaufsicherung 13 einerseits sowie den Nocken 5.4 der Hülse 5 und dem Fettfangblech 12 andererseits ist jeweils ein Spalt gegeben. Die Nocken 5.4 und die Auflagerfläche 5.5 der Hülse 5 sind in diesem montierten Zustand ohne weitere Funktion. Wie weiter in Fig. 1 zu erkennen, schließen die sich an die Auflagerfläche 5.5 bzw. nach den Nocken 5.4 anschließenden Teilbereiche 5.1 der Hülse 5 die Schmierstoffräume 14 und 15 zusammen mit dem radial auf diesem stehenden Fettfangblech 12 bzw. der ebenfalls radial auf diesen stehenden Ablaufsicherung 13 ab, so daß das Schmierfett im Bereich der Wälzlager 2 bzw. 3 gehalten wird und keine Fremdstoffe in die Schmierstoffräume 14 und 15 eindringen können. Anstelle der Ablaufsicherung 13 bzw. des Fettfangblechs 12 kann zum Verschließen der Schmierstoffräume 14 und 15 in Zusammenspiel mit der Hülse 5 auch ein entsprechend ausgebildeter Schenkel der Nabe 1 verwendet werden, was in den Fig. 1 bzw. 6 jedoch nicht explizit dargestellt ist.

Eine solchermaßen ausgebildete Radlagerung zeichnet sich somit dadurch aus, daß bei einem einfachen und kompakten Aufbau auch bei dem Auftreten axialer Verschiebungen der Wälzlager 2 und 3 stets eine vollständige Kapselung des Schmierstoffvorrates über die biegeelastische Hülse 5 gewährleistet ist.

### Bezugszeichenliste

- 1: Nabe
- 1.1: Befestigungsflansch
- 2: vorderes Wälzlaqer
- 2.1: Innenring
- 2.2: Außenring
- 2.3: Kegelrolle
- 2.4: Käfig
- 3: hinteres Wälzlager
- 3.1: Innenring
- 3.2: Außenring
- 3.3: Kegelrolle
- 3.4: Käfig
- 4: Achsschenkel
- 4.1: Außengewindeabschnitt
- 4.2: Lagersitz
- 4.3: Lagersitz
- 4.4: Ringschulter
- 4.5: Anschlagfläche
- 5: Hülse
- 5.1: Teilbereich
- 5.2: Übergangsbereich
- 5.3: Bereich
- 5.4: Nocken
- 5.5: Auflagerfläche
- 6: Ringkammer
- 7: Achsmutter
- 8: Druckscheibe
- 9: Kappe
- 10: Verbindunaselement
- 11: Mitnahmering
- 12: Fettfangblech
- 13: Ablaufsicheruna
- 14: Schmierstoffraum
- 15: Schmierstoffraum

## Patentansprüche

1. Radlagerung, insbesondere für Anhängerachsen, mit einer mittels eines vorderen und eines hinteren Wälzlagers (2 und 3) drehbar auf einem Achsschenkel (4) gelagerten Nabe (1), an der ein Rad befestigbar ist, wobei zwischen den Innenringen (2.1 und 3.1) des vorderen und des hinteren Wälzlagers (2 und 3) eine den Achsschenkel (4) umgebende Hülse (5) angeordnet ist,
**dadurch gekennzeichnet**,
daß die Hülse (5) als in axialer Richtung des Achsschenkels (4) biegeelastische Hülse (5) ausgebildet ist.

2. Radlagerung nach Anspruch 1, dadurch gekennzeichnet, daß an der Hülse (5) einzelne vorgegebene Biegebereiche ausgebildet sind.

3. Radlagerung nach Anspruch 1 oder 2, dadurch gekennzeichnet, daß die Hülse (5) wenigstens zwei Teilbereiche (5.1) mit jeweils unterschiedlichem Durchmesser aufweist, die über einen Übergangsbereich (5.2) miteinander verbunden sind, der im Längsschnitt S-förmig ausgebildet ist.

4. Radlagerung nach Anspruch 3, dadurch gekennzeichnet, daß die Hülse (5) zumindest im S-förmigen Übergangsbereich (5.2) wenigstens einen radial umlaufenden Bereich (5.3) mit einer reduzierten Materialwandstärke aufweist.

5. Radlagerung nach mindestens einem der Ansprüche 1 bis 4, dadurch gekennzeichnet, daß auf der äußeren Mantelfläche der Hülse (5) auf einer umlaufenden Kreisbahn radial nach außen vorstehende Nocken (5.4) zur Anlage an einem mit dem Außenring des hinteren Wälzlagers (3) verbundenen Fettfangblech (12) ausgebildet sind.

6. Radlagerung nach mindestens einem der Ansprüche 1 bis 5, dadurch gekennzeichnet, daß die Hülse (5) in Zusammenspiel mit der Nabe (1) oder in Zusammenspiel mit einem Fettfangblech (12) oder einer Ablaufsicherung (13) der Wälzlager (2 und 3) Schmierfett im Bereich der Wälzlager (2 und 3) haltend ausgebildet ist.
